Europäisches Patentamt

European Patent Office

Office européen des brevets

(11) Veröffentlichungsnummer: **0 501 115 A1**

## (12) EUROPÄISCHE PATENTANMELDUNG

(21) Anmeldenummer: **92100487.5**

(22) Anmeldetag: **14.01.92**

(51) Int. Cl.5: **B60G 17/02**, B60G 17/027, B60G 15/00

(30) Priorität: **18.02.91 DE 4104904**

(43) Veröffentlichungstag der Anmeldung:
**02.09.92 Patentblatt 92/36**

(84) Benannte Vertragsstaaten:
**BE DE ES FR GB IT NL SE**

(71) Anmelder: **AUGUST BILSTEIN GMBH & CO KG**
**August-Bilstein-Strasse, Postfach 1151**
**W-5828 Ennepetal(DE)**

(72) Erfinder: **Huang, Zhen, Dr.**
**Kleverplatz 6**
**W-5600 Wuppertal 1(DE)**

(54) **Regelbares Federungssystem für Radaufhängungen an Kraftfahrzeugen.**

(57) Um ein regelbares Federungssystem für Radaufhängungen an Kraftfahrzeugen, das zum einen mit dem Radführungsglied (2) und zum anderen mit dem Fahrzeugaufbau (1) verbunden ist, bestehend aus einer Feder (3) und einem zu dieser parallel arbeitende hydraulischen Stoßdämpfer (4) sowie einer zweiten, der ersten zuschaltbaren Feder mit einfachen Mitteln derart zu gestalten, daß die Stell- und Federelemente einem möglichst geringen Verschleiß ausgesetzt sind, ist vorgesehen, daß beide Federn (3, 5) parallel arbeiten.

Fig. 1

EP 0 501 115 A1

Die Erfindung betrifft ein regelbares Federungssystem für Radaufhängungen an Kraftfahrzeugen nach dem Oberbegriff des Anspruchs 1. Derartige regelbare Federungssysteme werden insbesondere eingesetzt, um das Federungsverhalten und insbesondere das Schwingungsverhalten bei Kraftfahrzeugen zu verändern. Da die Schwingung des Fahrzeuges, ausgelöst durch Bodenunebenheiten, je nach Geschwindigkeit des Fahrzeuges und Länge der Bodenwelle unterschiedlich ist, werden regelbare Federungssysteme für Radaufhängungen eingesetzt, die das Schwingungsverhalten des Fahrzeuges über entsprechende Rechenprogramme oder durch Handverstellung den äußeren Fahrbedingungen anpassen.

Die DE 26 04 809 A1 zeigt verschiedene Lösungen für die Ausbildung von regelbaren Federungssystemen auf. Dabei wird eine stufenlose Regelung der Federkennlinie vorgeschlagen. Für eine hydropneumatische Feder wird auch eine Zwei-Punkt-Verstellung beschrieben.

Nachteilig gestalten sich die beschriebenen Federungssysteme als sehr aufwendig. Sie sind durch den Einsatz einer aufwendigen Regelung und der Vielzahl der Verstellelemente auch störanfällig und hohem Verschleiß unterworfen.

Von daher stellt sich die Aufgabe, ein regelbares Federungssystem mit einfachen Mitteln zu gestalten, deren Stell- und Federelemente einem möglichst geringen Verschleiß ausgesetzt sind.

Diese Aufgabe wird erfindungsgemäß durch die kennzeichnenden Merkmale des Anspruchs 1 gelöst. Vorteilhafte Ausgestaltungen und Weiterbildungen sind in den Ansprüchen 2 bis 12 beschrieben.

Die mit der Erfindung erzielten Vorteile bestehen insbesondere in dem einfachen und robusten Aufbau des erfindungsgemäßen regelbaren Federungssystems. Durch die schnelle Umschaltbarkeit ist es auch für eine semiaktive Fahrzeugsregelung geeignet. Bei der Ausbildung nach Anspruch 3 wird sichergestellt, daß bei Ausfall der Regelelemente automatisch das sicherste Fahrverhalten durch Einsatz der härtesten Federung eintritt. Besonders vorteilhaft kann die Erfindung bei Schwerlastwagen und Omnibussen eingesetzt werden, um das Federungsverhalten mit einfachen Mitteln der Beladung anzupassen.

Ein Ausführungsbeispiel der Erfindung ist in der Zeichnung dargestellt und wird im folgenden näher beschrieben. Es zeigen

Fig. 1    ein Prinzipbild des regelbaren Federungssystems,

Fig. 2    die Ausbildung eines Systems mit mechanischen Federn und einem schaltbaren Hydraulikzylinder als Sperre in kompakter Bauweise und

Fig. 3    die Ausbildung einer hydraulisch schaltbaren mechanischen Feder als separates Bauteil.

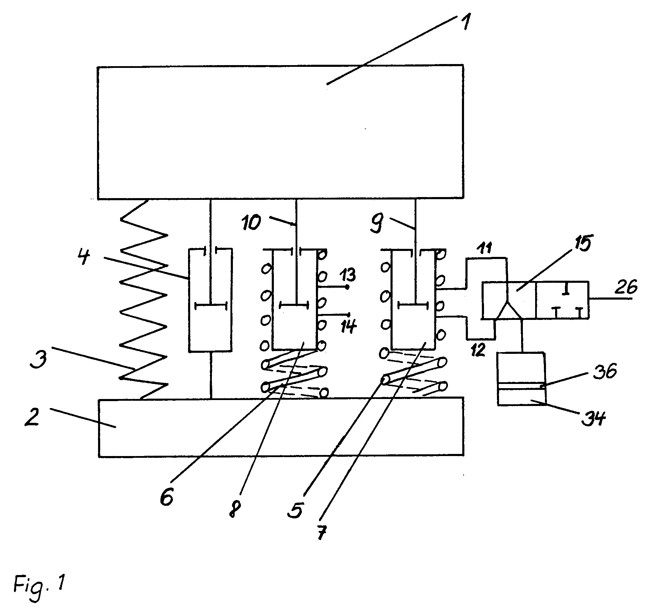

Fig. 1 zeigt ein Prinzipbild des regelbaren Federungssystems, bei dem zwischen Fahrzeugaufbau 1 und Radführungsglied 2, wie z. B. einem Radlenker, eine übliche Federungseinheit, bestehend aus Feder 3 und hydraulischem Stoßdämpfer 4, angeordnet ist. Diese arbeiten wie üblich zueinander parallel. Zusätzlich hierzu sind weitere Federn 5, 6 angeordnet, die zur Federungseinheit 3, 4 parallel arbeiten. Die Federn 5, 6 sind an einem Ende mit dem Radführungsglied 2 verbunden und mit ihrem anderen Ende mit dem Gehäuse eines Hydraulikzylinders 7, 8. Eine bewegliche Kolbenstange 9, 10 trennt über einen an ihrem Ende angeordneten Kolben den Hydraulikzylinder 7, 8 in zwei Arbeitsräume und ist an ihrem anderen Ende mit dem Fahrzeugaufbau 1 verbunden. Beide Arbeitsräume der Hydraulikzylinder 7, 8 sind jeweils über Leitungen 11, 12, 13, 14 mit einem Schaltventil 15 verbunden. Dieses Schaltventil öffnet oder schließt eine Verbindung zwischen den Leitungen 11, 12 bzw. 13, 14.

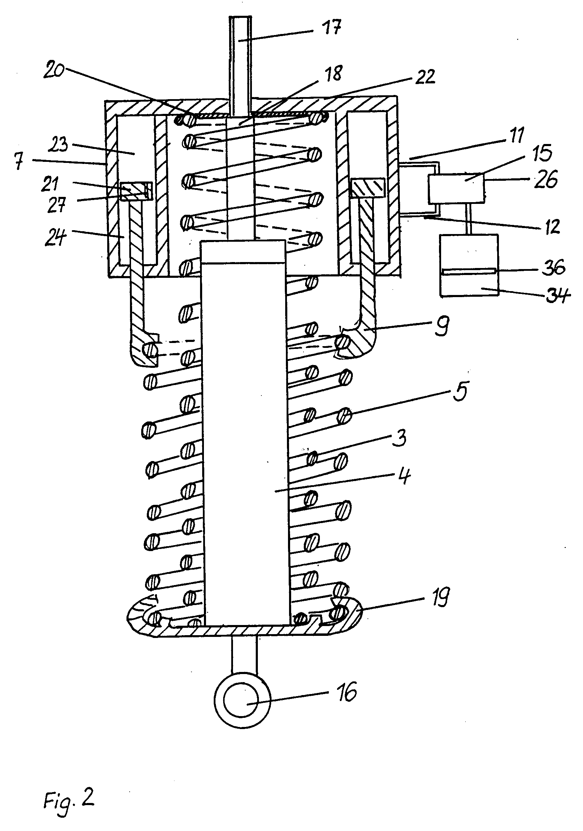

Fig. 2 zeigt eine Ausbildung eines regelbaren Federungssystems mit einer zuschaltbaren Feder 5. Ein üblicher Stoßdämpfer 4 ist zum Anschluß an das Radführungsglied 2 und den Fahrzeugaufbau 1 mit einer Öse 16 am Zylindermantel und einem Gewinde 17 an der Kolbenstange 18 ausgebildet. Der fest mit der Kolbenstange 18 verbundene Federteller 20 und der mit dem Zylindermantel verbundene Federteller 19 halten die parallel zum Stoßdämpfer 4 arbeitende Feder 3. Diese Feder 3 ist als Wendeldruckfeder ausgebildet und um den Stoßdämpfer 4 angeordnet. Um diese Feder 3 legt sich eine weitere Feder 5, die mit einem Ende mit dem Federteller 19 verbunden ist. Das andere Ende dieser Feder 5 ist mit einem ringförmigen Kolben 21 eines schaltbaren Hydraulikzylinders 7 verbunden. Dieser Zylinder ist als Ringzylinder aufgebaut und umschließt ebenfalls Feder 3 und Stoßdämpfer 4. Der Boden 22 des Kolbens 21 ist mit dem Federteller 20 verbunden und somit über die Kolbenstange 18 mit dem Fahrzeugaufbau 1. Der Kolben 21 taucht mit seinem abdichtenden Ende in den Ringraum des Hydraulikzylinders 7 ein und trennt diesen in zwei Arbeitsräume 23, 24. Jeder Arbeitsraum 23, 24 ist über eine Leitung 11, 12 mit einem Schaltventil 15 verbunden. Das Schaltventil kann die Verbindung zwischen den Leitungen 11, 12 sperren oder öffnen. Es wird in üblicher Weise z. B. über elektrische Mittel gesteuert. Die Steuerleitung 26 kann einem Schalter oder einem Fahrzeugrechner zugeführt werden. Bypassbohrungen 27 mit einem hohen strömungswiderstand schließen die beiden Arbeitsräume 23, 24 kurz. Sie beeinflußen die normale Regelung nicht. Bei Ausfall der Regelung oder Ausfall der Stromzufuhr zum Schaltventil 15, schließt dieses Ventil automatisch und damit wird die Feder 5 zugeschaltet, was zu einer harten Federung und damit einem sicheren Fahrverhalten führt. Die Bypassbohrungen 27 dienen in diesem Fall dazu, alle Zusatzfedern 5, 6 in eine mittlere Ausgleichslage zu bringen, um dadurch sicherzustellen, daß alle Räder eine gleiche Höhenlage erhalten, auch wenn bei Ausfall der Ansteuerung der Schaltventile 15 die Kolbenstangen 9, 10 an den verschiedenen Rädern in einer unterschiedlichen Höhenlage in den zugeordneten Hydraulikzylinder 7, 8 fixiert worden sind.

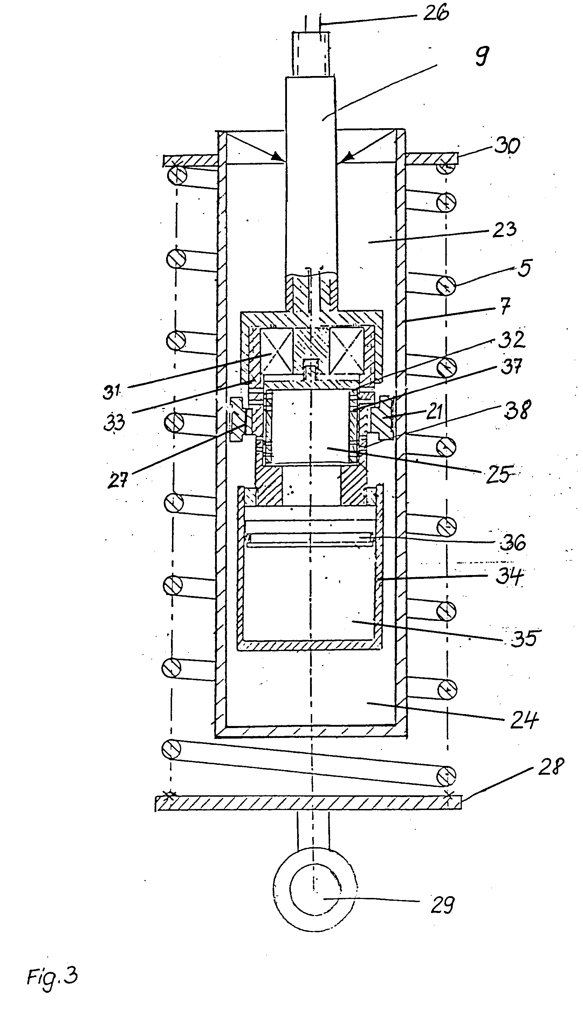

Fig. 3 zeigt ein einzelnes zuschaltbares Federungselement, daß räumlich getrennt zur Feder 3 und Stoßdämpfer 4 zwischen Radführungsglied 2 und Fahrzeugaufbau 1 parallel arbeitend eingebaut werden kann. Diese Bauweise ist beim Einsatz für Omnibusse oder schwere Kraftfahrzeuge vorzuziehen. Die zuschaltbare Feder 5 umgibt den Hydraulikzylinder 7. Sie ist mit einem Ende mit einem Federteller 28, der eine Öse 29 aufweist, verbunden. Diese Öse dient zur Verbindung mit dem Radführungsglied 2. Das andere Ende der Feder 5 ist über einen Flansch 30 mit dem Gehäuse des Hydraulikzylinders 7 verbunden. In den Hydraulikzylinder 7 taucht längsbeweglich eine Kolbenstange 9 ein, die an ihrem unteren Ende einen Kolben 21 aufweist. Dieser Kolben trennt den Hydraulikzylinder 7 in zwei Arbeitsräume 23, 24. Der Kolben weist ebenso wie der Kolben nach Fig. 2 eine Bypassbohrung 27 auf. Das Schaltventil 15 ist räumlich mit dem Kolben 21 zusammengefaßt. Die Steuerleitung 26 verläuft durch eine Bohrung der Kolbenstange 9 und dient zur Stromzufuhr der Spule 31 eines Elektromagneten. Ein axial verschieblicher Stellschieber 32 wirkt als Anker für den Elektromagneten. Eine nicht dargestellte Feder entfernt den Stellschieber 32 von der Spule 31, wenn die Spule nicht vom Strom durchflossen wird, wie es in Fig. 3 dargestellt ist. Der Stellschieber 32 ist glockenförmig ausgebildet und weist einen inneren Hohlraum auf. Ventilbohrungen 37 in der Umfangswand des Stellschiebers 32 wirken mit Durchgangsbohrungen 38 im Gehäuse 33 zusammen, das das integrierte Schaltventil 15 und den Kolben 21 aufnimmt. Sobald die Spule 31 stromdurchflossen ist, wird der Stellschieber 32 angezogen und liegt direkt an der Unterseite der Spule 31 an. In diesem Schaltzustand fluchten die Öffnungen in der Umfangswand des Stellschiebers 32 mit den Öffnungen im Gehäuse 33. Da derartige Öffnungen oberhalb und unterhalb des Kolbens 21 angeordnet sind, ist der Arbeitsraum 23 mit dem Arbeitsraum 24 über den Ventilraum 25 hydraulisch verbunden, so daß der Kolben 21 im Hydraulikzylinder 7 frei beweglich ist. An das Gehäuse 33 schließt sich ein Volumensausgleichsbehälter 34 an. Dieser weist einen Gasraum 35 auf, der durch einen beweglichen und abgedichteten Trennkolben 36 gegenüber dem Hydrauliksystem verschlossen ist. Der komprimierbare Gasraum dient zum Ausgleich des Hydraulikvolumens, das durch das unterschiedlich tiefe Eintauchen der Kolbenstange 9 verändert wird.

Bezugszeichenliste

| 1 | Fahrzeugaufbau |
|---|---|
| 2 | Radführungsglied |
| 3 | Feder |
| 4 | stoßdämpfer |
| 5 | Feder |
| 6 | Feder |
| 7 | Hydraulikzylinder |
| 8 | Hydraulikzylinder |
| 9 | Kolbenstange |
| 10 | Kolbenstange |
| 11 | Leitung |
| 12 | Leitung |
| 13 | Leitung |
| 14 | Leitung |
| 15 | Schaltventil |
| 16 | Öse |
| 17 | Gewinde |
| 18 | Kolbenstange |
| 19 | Federteller |
| 20 | Federteller |
| 21 | Kolben |
| 22 | Boden |
| 23 | Arbeitsraum |
| 24 | Arbeitsraum |
| 25 | Ventilraum |
| 26 | Steuerleitung |
| 27 | Bypassbohrung |
| 28 | Federteller |
| 29 | Öse |
| 30 | Flansch |
| 31 | Spule |
| 32 | Stellschieber |
| 33 | Gehäuse |
| 34 | Volumenausgleichsbehälter |
| 35 | Gasraum |
| 36 | Trennkolben |
| 37 | Ventilbohrungen |
| 38 | Durchgangsbohrungen |

**Patentansprüche**

1. Regelbares Federungssystem für Radaufhängungen an Kraftfahrzeugen, das zum einen mit dem Radführungsglied und zum anderen mit dem Fahrzeugaufbau verbunden ist, bestehend aus einer Feder und einem zu dieser parallel arbeitende hydraulischen Stoßdämpfer sowie einer zweiten, der ersten zuschaltbaren Feder, dadurch gekennzeichnet, daß beide Federn (3, 5) parallel arbeiten.

2. Regelbares Federungssystem nach Anspruch 1, dadurch gekennzeichnet, daß zusätzliche parallel arbeitende Federn (6) zuschaltbar sind.

3. Regelbares Federungsystem nach Anspruch 1 oder Anspruch 2, dadurch gekennzeichnet, daß sich bei Ausfall der Regelung die schaltbaren Federn (5, 6) selbständig zuschalten.

4. Regelbares Federungsystem nach einem der Ansprüche 1 bis 3, dadurch gekennzeichnet, daß wenigstens ein Ende der schaltbaren Federn (5, 6) über eine schaltbare Sperre mit dem Fahrzeugaufbau (1) oder dem Radführungsglied (2) verbunden sind.

5. Regelbares Federugnssystem nach Anspruch 4, dadurch gekennzeichnet, daß als Sperre schaltbare Hydraulikzylinder (7, 8) eingesetzt sind.

6. Regelbares Federungssystem nach einem oder mehreren der Ansprüche 1 bis 5, dadurch gekennzeichnet, daß die Federn (3, 5, 6) als mechanische Federn ausgebildet sind.

7. Regelbares Federungssystem nach einem oder mehreren der Ansprüche 1 bis 5, dadurch gekennzeichnet, daß die Feder (3) als Luftfeder ausgebildet ist.

8. Regelbares Federungssystem nach einem der Ansprüche 1 bis 7, dadurch gekennzeichnet, daß der schaltbare Hydraulikzylinder (7, 8) innerhalb eines Freiraumes im Bereich der Mittelachse der zuschaltbaren Feder (5, 6) angeordnet ist.

9. Regelbares Federungssystem nach einem oder mehreren der Ansprüche 5 bis 8, dadurch gekennzeichnet, daß ein innerhalb oder außerhalb des schaltbaren Hydraulikzylinders (7, 8) angeordnetes hydraulisches schaltventil (15) zum Schalten verwendet wird.

10. Regelbares Federungssystem nach Anspruch 8, dadurch gekennzeichnet, daß das Schaltventil (15) mit einem Stellschieber (32) ausgebildet ist, der durch axiales Verschieben oder Drehen Kanäle zwischen den zwei Arbeitsräumen (23, 24) des Zylinderraums der schaltbaren Hydraulikzylinder (7, 8) über den Ventilraum (25) öffnet oder schließt.

11. Regelbares Federungssystem nach einem oder mehreren der Ansprüche 5 bis 10, durch gekennzeichnet, daß das Hydrauliksystem wenigstens einen Volumenausgleichsbehälter (34) aufweist.

12. Regelbares Federungssystem nach Anspruch 11, dadurch gekennzeichnet, daß der Volumenausgleichsbehälter (34) innerhalb oder außerhalb der schaltbaren Hydraulikzylinder (7, 8) angeordnet ist.

13. Regelbares Federungssystem nach Anspruch 10 oder Anspruch 11, dadurch gekennzeichnet, daß der Volumenausgleichsbehälter (34) einen gegenüber dem Hydrauliksystem durch einen Trennkolben (36) verschlossenen Gasraum (35) aufweist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3 608 934 (FICHTEL & SACHS) | 1,6 | B60G17/02 |
| Y | * Zusammenfassung; Abbildung 1 * | 4,5,9, 11,12 | B60G17/027 B60G15/00 |
| A | * Spalte 3, Zeile 25 - Spalte 4, Zeile 51 * | 7 | |
| | --- | | |
| Y | FR-A-2 562 844 (ROBERT BOSCH) | 4,5,9, 11,12 | |
| A | * Zusammenfassung; Abbildung 1 * | 1,6,8,10 | |
| | --- | | |
| Y | PATENT ABSTRACTS OF JAPAN vol. 10, no. 301 (M-525)(2357) 14. Oktober 1986 & JP-A-61 112 839 ( HINO MOTORS ) 30. Mai 1986 * Zusammenfassung * | 1,4-6,9 | |
| | --- | | |
| Y | FR-E-80 847 (ARMSTRONG PATENTS CO.) * Seite 1, Spalte 1 - Spalte 2, Absatz 1; Abbildungen 1,2 * | 1,4-6,9 | |
| | --- | | |
| X | US-A-2 802 674 (GENERAL MOTORS CORP.) * Spalte 1 - Spalte 6; Abbildung * | 1,4-6 | |
| | --- | | **RECHERCHIERTE SACHGEBIETE (Int. Cl.5 )** |
| A | DE-U-1 909 509 (SCHLAMP R. & D.) * das ganze Dokument * | 1,9,10 | |
| | --- | | B60G |
| A | EP-A-0 389 828 (HERMANN HEMSCHEIDT MASCHINENFABRIK) * Zusammenfassung; Abbildungen 1,2,8 * | 1,9-12 | |
| | --- | | |
| X,P | EP-A-0 444 278 (ROBERT BOSCH) * Zusammenfassung; Abbildungen * | 1,3,8,9, 11,12 | |
| | --- | | |
| A | FR-A-1 473 378 (SCHMID L.F.) * Abbildungen * | 1 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 12 JUNI 1992 | TSITSILONIS  L. |